# EUROPÄISCHE PATENTANMELDUNG

(11) **EP 1 006 046 A2**
(43) Veröffentlichungstag der Anmeldung: **07.06.2000**
(21) Anmeldenummer: 99124322.1
(22) Anmeldetag: 06.12.1999
(51) Int. Cl.: B62K 25/08

(54) **Stossdämpfer**

(30) Priorität: 04.12.1998 DE 29821720 U
(71) Anmelder: Wendler, Jochen, 71573 Allmersbach (DE)
(72) Erfinder: Wendler, Jochen, 71573 Allmersbach (DE)
(74) Vertreter: Lenzing, Andreas, Dr.

(57) **Zusammenfassung**

Die Erfindung betrifft einen Stoßdämpfer für einen Hinterbau oder eine Vorderradgabel eines Fahrrades, wobei der Stoßdämpfer teleskopartig komprimierbar und ausfahrbar ist, mit einer Luftfeder und einem Dämpfer, der mit einem festen, flüssigen oder gasförmigen Medium derart dämpft, dass die Ausfahrgeschwindigkeit abhängig von der Kompression ist, wobei ein Kolben (21) vorgesehen ist, der zur Kompression über eine Druckstange betätigt wird, wobei der Kolben (21) keine feste Verbindung mit der Druckstange (26) aufweist und bei der Kompression keine Querkräfte auf den Kolben (21) wirken.

## Beschreibung

Die vorliegende Erfindung betrifft einen Stoßdämpfer für Fahrräder mit den Merkmalen des Oberbegriffs der unabhängigen Ansprüche.

Derartige Stoßdämpfer, die technisch korrekt als Kombination aus Teleskop-Luftfeder und Schwingungsdämpfer zu bezeichnen sind, sind aus der Praxis bekannt. Luftfedern haben gegenüber anderen Federungssystemen den Vorteil, dass sie ein ausgesprochen geringes Gewicht aufweisen. Auch die Federhärte und die Federprogression ist bei einer Luftfeder einstellbar. Nachteilig bei den bekannten Luftfedern sind Probleme bei der Abdichtung des Federvolumens gegenüber dem Außenraum. Bei den bekannten Stoßdämpfern wird das federnde Luftvolumen über einen Radialwellendichtring abgedichtet, der zwischen dem inneren und dem äußeren Dämpferrohr, bei Teleskopgabeln zwischen dem Tauchrohr und dem Standrohr angeordnet ist. Diese Dichtung ist zugleich auch Kapselung gegenüber von außen eindringendem Schmutz, der sich bei Fahrrädern nahezu zwangsläufig dort einfindet.

Weiterhin ist üblicherweise das innere Kolbenrohr oder das Standrohr zugleich der Kolben der Luftfeder. Die bei einem solchen Stoßdämpfer auftretenden Querkräfte greifen dadurch im Bereich der Dichtflächen an, die ihrerseits eine sehr präzise Passung aufweisen müssen. Derartige Querkräfte erhöhen das Losbrechmoment und damit die Ansprechempfindlichkeit des Stoßdämpfers ebenso wie den Verschleiß im Bereich der Dichtfläche.

Es ist deshalb Aufgabe der vorliegenden Erfindung, einen gattungsgemäßen Stoßdämpfer für Fahrräder dahingehend zu verbessern, dass zum einen das Losbrechmoment und der Verschleiß im Bereich der Dichtflächen verringert wird und zum anderen eine wirkungsvolle Kapselung des Stoßdämpfers gegen von außen in das Luftfeder/Schwingungsdämpfersystem eindringende Verschmutzung gewährleistet ist.

Diese Aufgaben werden von einem Stoßdämpfer mit den Merkmalen des Anspruchs 1 sowie von einem Stoßdämpfer mit den Merkmalen des Anspruchs 2 gelöst.

Ein besonders niedriges Losbrechmoment auch bei einer Belastung des Stoßdämpfers quer zur Eintauchrichtung ist erreichbar, wenn ein Kolben vorgesehen ist, der zur Kompression über eine Druckstange betätigt wird, wobei der Kolben keine feste Verbindung mit der Druckstange aufweist und bei der Kompression keine Querkräfte auf den Kolben wirken. Eine gute Kapselung gegenüber von außen eindringendem Schmutz wird erreicht, wenn das gesamte die Luftfeder und den Dämpfer umfassende Kompressions- und Dämpfungssystem in einem Standort abdichtend eingesetzt ist.

Weiter wird auf längere Zeit eine gute Leichtgängigkeit und damit ein gutes Ansprechverhalten des erfindungsgemäßen Stoßdämpfers gewährleistet, wenn der Kolben eine umfangsseitige umlaufende Nut aufweist, die mit einem Schmiermittel füllbar ist. In der Praxis ist es ausreichend, wenn die Zugstufe des Dämpfers über ein Bedienelement manuell einstellbar ist und die Druckstufe von der Viskosität des Dämpfungsmediums abhängig ist. Die Druckstufe kann somit über einen Austausch des Dämpfungsmediums geändert werden, während die im Fahrbetrieb relevantere Zugstufe vom Fahrer ohne technische Eingriffe variiert werden kann. Das Bedienelement der Zugstufe ist dabei vorteilhaft so angeordnet, dass es bei Montage eines Dämpfers an einem Fahrrad während der Fahr von dem Fahrer erreichbar ist. Insbesondere ist vorteilhaft, wenn das Bedienelement und ein Füllventil für die Luftfeder koaxial zueinander an einer Stirnseite des Stoßdämpfers angeordnet sind, wobei vorzugsweise das Bedienelement das Füllventil umgibt.

Für eine Einstellung des aus der Ruhe- oder Normallage heraus zur Verfügung stehenden Federwegs des Stoßdämpfers ist vorgesehen, dass eine Veränderung des von der Ruhelage aus möglichen Kompressionszuges mittels Buchsen erfolgt, die auf die Druckstange aufgesetzt werden. Insbesondere ist hierdurch auch die Einstellung des Verhältnisses zwischen Positiv- und Negativfederweg möglich. Die Endanschläge des Dämpfungshubes werden bevorzugt aus einem Elastomer gefertigt, das neben einer Federeigenschaft auch eine eigene interne Reibungsdämpfung aufweist. Neben einer vollkommenen mechanischen Trennung des Kolbens von der Druckstange kann auch vorgesehen sein, dass der Kolben mit der Druckstange über ein flexibles Verbindungselement, beispielsweise eine eingeklebte Elastomerfeder, verbunden ist. Auch eine solche Kolbenanordnung ermöglicht ein gutes Ansprechverhalten des Stoßdämpfers durch die Minimierung der auf den Kolben wirkenden Querkräfte.

Die Dämpfung des Stoßdämpfers kann über ein flüssiges Medium erfolgen, wenn in Betriebsstellung oberhalb des Kolbens ein flüssiges Dämpfungsmedium eingefüllt ist, das bei maximal expandiertem Stoßdämpfer, also voll ausgenutztem Federweg mindestens bis an das Dämpfungsventil heranreicht.

Im folgenden werden Ausführungsbeispiele der vorliegenden Erfindung anhand der Zeichnungen beschrieben. Es zeigen:
- Figur 1:: Einen Stoßdämpfer für Fahrräder in einem teilweisen Querschnitt von vorne; sowie
- Figur 2:: eine andere Ausführungsform des Stoßdämpfers gemäß Figur 1 mit einer weiteren Abstimmungsmöglichkeit.

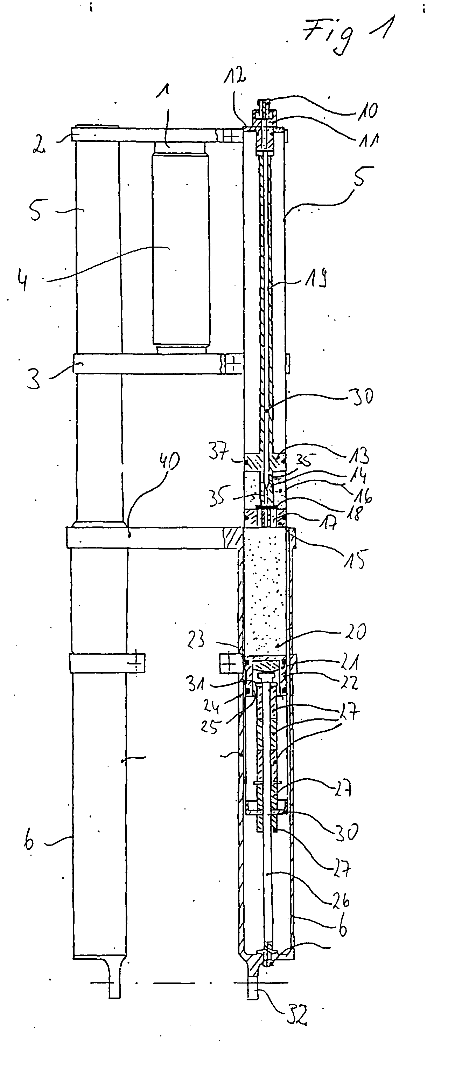

In der Figur 1 ist eine Vorderradgabel eines Fahrrades mit einem erfindungsgemäßen Stoßdämpfer in einem Querschnitt von vorne dargestellt. Die Vorderradgabel weist in an sich bekannter Weise ein Schaftrohr 1 auf, das eine obere Gabelbrücke und eine untere Gabelbrücke 2 trägt. Das Schaftrohr 1 ist über Wälzlager in einem Lenkkopf 4 eines (nicht näher dargestellten) Fahrradrahmen gelagert. Die obere Gabelbrücke 2 und die untere Gabelbrücke 3 umgreifen insgesamt zwei Gabelstandrohre 5, die gleitend jeweils in einem Tauchrohr 6 gelagert sind. Das in der Figur 1 rechte Standrohr 5 enthält von oben nach unten zunächst ein Füllventil 10 und ein Betätigungselement 11 zur Einstellung der Zugstufe des Stoßdämpfers. Das Füllventil 10 und das Betätigungselement 11 sitzen auf einem Deckelstück 12 und stehen in Verbindung mit einer Haltestange 19, die einen Abschlusskolben 13 an seiner Position hält. Der Abschlusskolben 13 trägt an seiner der Haltestange 19 gegenüberliegenden Seite ein Rohrstück 14, das wiederum ein plattenförmiges Dämpfungsventil 15 trägt. Zwischen dem Abschlusskolben 13 und dem Dämpfungsventil 15 ist eine Dämpfungskammer 16 eingeschlossen. Das Dämpfungsventil 15 weist eine Anzahl von Durchgangsbohrungen 17 auf, die von einem plattenförmigen Ventilglied 18 im Normalfall verschlossen sind. Unterhalb des Dämpfungsventils 15 ist ein Kompressionsraum 20 vorgesehen, der wiederum an seiner Unterseite von einem Kompressionskolben 21 verschlossen ist. Dieser Kompressionskolben 21 ist schwimmend im Standrohr 5 gelagert.

Der Kompressionskolben 21 ist an seiner äußeren Umfangsfläche mit einer Schmierkammer 22 versehen, die zwischen zwei O-Ringen 23, 24 angeordnet ist. Der Kompressionskolben 21 selbst ist umgekehrt topfförmig gestaltet und weist eine innere, mittige Sackbohrung 25 auf. Dabei ist der Bohrungsgrund der Sackbohrung 25 ballig oder konvex gestaltet. Am Bohrungsgrund liegt eine Druckstange 26 an, die mit einer Schraube 27 starr mit dem Tauchrohr 6 verschraubt ist. Die Druckstange 26 trägt eine Anzahl von buchsenförmigen oder hülsenförmigen Elastomeren 17. Nach unten ist das Tauchrohr 5 durch einen Abschlussdeckel 30 verschlossen.

Das Luftvolumen der Dämpfungskammer 16 und der Kompressionskammer 20 wird über das Füllventil 10 mit Luft gefüllt. Die Luft geht dabei durch eine in der Haltestange 19 angeordnete konzentrische Bohrung, in der außerdem eine Düsennadel 30 einliegt.

Nach dem Füllen der Dämpfungskammer 16 und der Kompressionskammer 20 mit Luft oder einem ähnlichen Gas wirkt der Gasdruck auf die Oberseite des Kompressionskolbens 21 und drückt diesen in der Figur 1 nach unten. Der Bohrungsgrund der Sackbohrung 25 liegt dabei auf der Druckstange 26 auf und bewegt folglich das Tauchrohr 6 ebenfalls nach unten, bis ein oberes, im Durchmesser vergrößertes Ende 31 der Druckstange 26 auf den Elastomeren 27 aufliegt, die sich wiederum gegen den unteren Abschlussdeckel 30 des Standrohres 5 abstützen. Die Gabel federt folglich aus.

Wird die Gabel komprimiert, wie es im normalen Fahrbetrieb eines Fahrrades auftritt, so drückt das an einer Achsaufnahme 32 angeordnete Vorderrad das Standrohr 6 nach oben. Die Druckstange 26 überträgt dabei die Druckkraft auf den Bohrungsgrund der Sackbohrung 25 im Kompressionskolben 21. Dieser wandert gegen den in der Kompressionskammer 20 herrschenden Gasdruck nach oben. Der Gasdruck wird dadurch in der Kompressionskammer 21 erhöht. Zunächst herrscht in der Dämpfungskammer 16 und der Kompressionskammer 20 der gleiche Gasdruck. Eine Kompression der Luft in der Kompressionskammer 20 führt jedoch dazu, dass dort der Gasdruck ansteigt. Das Gas strömt durch die Bohrungen 17 am Ventilglied 18 vorbei in die Dämpfungskammer 16. Auf diese Weise federt die Gabel ein. Wird sie bis zum Anschlag komprimiert, so liegt das untere Elastomer 27 an der Unterseite des Tauchrohres 6 an und stellt eine Art Anschlagspuffer dar. Das Kompressionsvolumen 20 ist dann maximal komprimiert.

Lässt die von unten her über die Radachse 32 auf die Gabel wirkende Kraft nach, so kann der in der Kompressionskammer 20 herrschende Luftdruck den Dämpfungskolben 21 nach unten drücken und über die Druckstange 26 das Tauchrohr 6 nach unten verfahren. Die Gabel expandiert, bis Kräftegleichgewicht herrscht. Dabei wird die Expansion des Kompressionsraums 20 in dieser sogenannten Zugstufe gedämpft, indem die unter hohem Druck in der Dämpfungskammer 16 befindliche Luft nicht ungehemmt zurückströmen kann. Das Ventilglied 18 verschließt nämlich in der Rückströmrichtung die Bohrungen 17. Die Luft muss über eine Drosselbohrung 35 zurück in die Kompressionskammer 20 strömen, wobei der Querschnitt der Rückströmbohrung 35 durch die Düsennadel 30 einstellbar ist, wenn die Düsennadel 30 über das Betätigungselement 11 und ein nicht dargestelltes Gewinde in Axialrichtung bewegt wird. Ein Herausschrauben der Düsennadel 30 bewirkt eine Vergrößerung des Querschnitts der Rückströmbohrung 35 und folglich eine geringere Zugstufendämpfung. Ein Hereinschrauben der Düsennadel 30 bewirkt eine Verkleinerung des freien Querschnitts der Rückströmbohrung 35 und folglich eine Vergrößerung der Zugstufendämpfung. Die Ausfahrgeschwindigkeit ist hierbei abhängig von der Rückstellkraft, also von dem von der Ruhelage aus eingeleiteten Kompressionshub.

In der Praxis wirken auf die Gabel Kräfte, die von der Axialrichtung des Standrohres 5 und des Tauchrohres 6 abweichen. Solche Kräfte treten insbesondere beim Bremsen im Bereich der Vorderachsaufnahme 32 auf. Diese Kräfte führen bei herkömmlichen Stoßdämpfern für Fahrräder zu Querkräften auf die Führung der Teleskopgabel. Bei dem insoweit beschriebenen Aufbau führt dagegen eine seitliche Bewegung des Tauchrohres 6 im Bereich des Führungsspiel dazu, dass sich das obere Ende der Druckstange 26 auf dem balligen oder konvexen Bohrungsgrund der Sackbohrung 25 abwälzt und der Kompressionskolben 21 folglich frei von Querkräften bleibt.

Weiter wird das gesamte Dämpfungs- und Federungssystem mit dem oberen Abschlussdeckel 12 und dem unteren Abschlussdeckel 30 in das Standrohr 5 eingesetzt und beispielsweise mit Sprengringen oben und unten im Standrohr 6 gesichert. Gegenüber der Umgebung ist das System folglich zum einen durch die Abschlussdeckel 12, 30 gekapselt und außerdem über die O-Ringe 24, 23 und einen O-Ring 37 des Abschlusskolbens 13 zusätzlich luftdicht abgedichtet. Diese Dichtungen werden im Betrieb des erfindungsgemäßen Stoßdämpfers nicht mit Schmutz beaufschlagt. Die dauerhafte Dichtigkeit dieses Systems ist gewährleistet, jedenfalls in wesentlich größerem Maße als bei bekannten Stoßdämpfern. Bei diesem Ausführungsbeispiel des erfindungsgemäßen Stoßdämpfers ist der maximal verfügbare Federweg und das Verhältnis zwischen Negativ- und Positivfederweg über die Anzahl und die Verteilung der Elastomere 27 einstellbar. Die Federvorspannung der Kompression 20, die die eigentliche Luftfeder darstellt, ist über den Fülldruck einstellbar und an das Fahrergewicht anpassbar. Die Zugstufendämpfung wird über die Position der Düsennadel 30 mit dem Bedienelement 11 eingestellt. Schließlich kann in die umlaufende Nut 22 eine Fettfüllung oder eine ähnliche Schmiermittelfüllung eingesetzt werden, die verhindert, dass die beiden O-Ringe 23, 24 im Betrieb trockenlaufen.

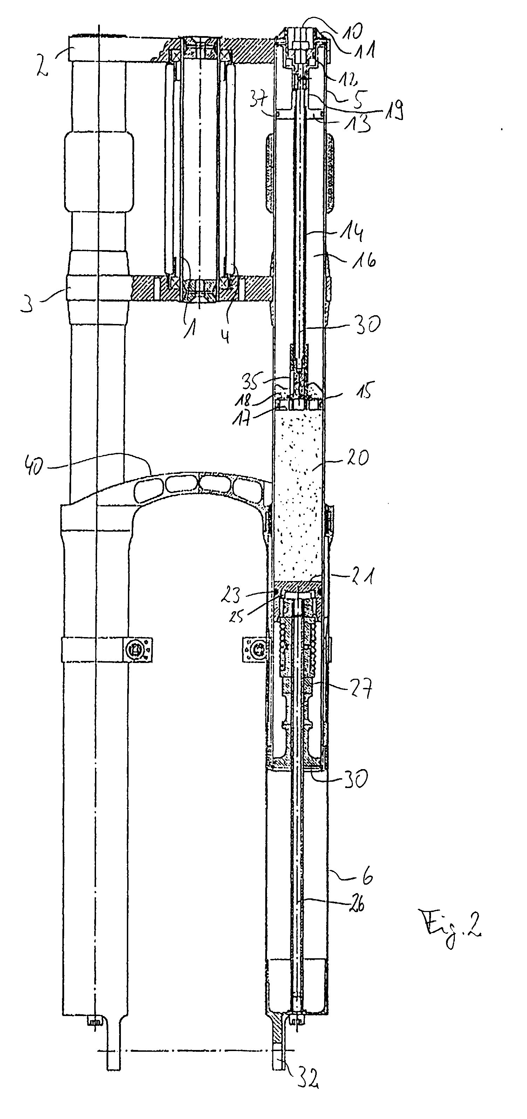

Die Figur 2 stellt ein anderes Ausführungsbeispiel der vorliegenden Erfindung dar. Gleiche Bezugsziffern bezeichnen gleiche Bauelemente.

Bei dem Ausführungsbeispiel der Figur 2 ist die Dämpfungskammer 16 genauso groß oder größer als die Kompressionskammer 20. Die Kompressionskammer 20 ist bei diesem Ausführungsbeispiel vollständig mit einem flüssigen Dämpfungsöl gefüllt. Ein Kompressionshub des Kompressionskolbens 21 infolge einer axialen Beaufschlagung der Federgabel mit einer Kraft führt dazu, dass die Flüssigkeit aus dem Kompressionsraum 20 durch die Bohrungen 17 an dem Ventilglied 18 vorbei in die Dämpfungskammer 16 strömt. Dort wird die oberhalb der Dämpfungsflüssigkeit stehende Luft komprimiert und führt zu der der Kompressionskraft entgegenwirkenden Federkraft. Lässt die Kompressionskraft nach, so strömt das in die Dämpfungskammer 16 eingedrungene Dämpfungsöl rückwärts durch die Bohrung 35 an der Düsennadel 30 vorbei und zurück in die Kompressionskammer 20. Bei dieser Ausführungsform der vorliegenden Erfindung erfolgt die Federwirkung ebenso wie bei dem Ausführungsbeispiel gemäß Figur 1 durch Kompression eines Gasvolumens, während im Gegensatz zu dem Ausführungsbeispiel gemäß Figur 1 die Dämpfung durch die Viskosität eines flüssigen Dämpfungsmediums erfolgt. Das Ausführungsbeispiel gemäß Figur 1 zeigt im Gegensatz dazu die Dämpfung über die Viskosität des gasförmigen Mediums. Auch in diesem Fall ist der Kompressionskolben 21 frei von Querkräften, weil sich die Druckstange 26 auf dem balligen Bohrungsgrund der Sackbohrung 25 abwälzen kann. Das gesamte System ist ebenso wie in dem Ausführungsbeispiel gemäß Figur 1 komplett abdichtend in dem Standrohr 5 angeordnet.

Die Einstellmöglichkeiten bei dem Ausführungsbeispiel gemäß der Figur 2 bestehen darin, dass zum einen der Federweg und das Verhältnis zwischen Negativ- und Positivfederweg über Anzahl und Position der Elastomere 27 gewählt werden kann. Weiter kann die Federvorspannung über den inneren Luftdruck in der Dämpfungskammer 16 eingestellt werden. Die Druckstufe der Dämpfung, also der geschwindigkeitsabhängige Widerstand bei der Strömung des flüssigen Fluids aus der Kompressionskammer 20 durch die Bohrungen 17 in die Dämpfungskammer 16 wird durch die Auswahl des Dämpfungsfluides eingestellt. Schließlich wird die Zugstufendämpfung wie bei dem Ausführungsbeispiel gemäß Figur 1 durch Betätigung der Düsennadel 30 über das Bedienelement 11 justiert.

Aus den Figuren 1 und 2 ist ersichtlich, dass die Tauchrohre 6 der Federgabel von den Standrohren 5 getrennt werden können, indem die Gewindeschrauben an der Unterseite der Druckstange 26 gelöst werden. Damit können die die Linearführung der Federgabel übernehmenden Teile gereinigt und geschmiert werden. Das Federungs- und Dämpfungssystem verbleibt dabei im Gegensatz zu bisher bekannten Konstruktionen komplett abgedichtet in dem Standrohr 5. Aus Gewichtsgründen und Kostengründen ist vorzugsweise nur ein Kompressions- und Dämpfungssystem in einem der Standrohre 5 angeordnet. Das andere Standrohr 5 kann bis auf eine Linearführung leer bleiben. Eine unsymmetrische Belastung der Tauchrohre 6 wird über eine Brücke 40 abgefangen, die an der Oberseite der Tauchrohre 6 angeordnet ist und beide Tauchrohre 6 miteinander verbindet.

Entsprechendes gilt für einen Teleskopstoßdämpfer, der für einen gefederten Hinterbau eines Fahrrades vorgesehen sein kann.

## Patentansprüche

1. Stoßdämpfer für einen Hinterbau oder eine Vorderradgabel eines Fahrrades, wobei der Stoßdämpfer teleskopartig komprimierbar und ausfahrbar ist, mit einer Luftfeder und einem Dämpfer, der mit einem festen, flüssigen oder gasförmigen Medium derart dämpft, dass die Ausfahrgeschwindigkeit abhängig von der Kompression ist, **dadurch gekennzeichnet**, dass ein Kolben vorgesehen ist, der zur Kompression über eine Druckstange betätigt wird, wobei der Kolben (21) keine feste Verbindung mit der Druckstange (26) aufweist und bei der Kompression im wesentlichen keine Querkräfte auf den Kolben (21) wirken.

2. Stoßdämpfer für einen Hinterbau oder eine Vorderradgabel eines Fahrrades, wobei der Stoßdämpfer teleskopartig komprimierbar und ausfahrbar ist, mit einer Luftfeder und einem Dämpfer, der mit einem festen, flüssigen oder gasförmigen Medium derart dämpft, dass die Ausfahrgeschwindigkeit abhängig von der Kompression ist, **dadurch gekennzeichnet**, dass das gesamte die Luftfeder und den Dämpfer umfassende Kompressions- und Dämpfungssystem in einem Standrohr (5) abdichtend eingesetzt ist.

3. Stoßdämpfer nach Anspruch 1 oder Anspruch 2, **dadurch gekennzeichnet**, dass der Kolben (21) eine umfangsseitige umlaufende Nut (22) aufweist, die mit einem Schmiermittel füllbar ist.

4. Stoßdämpfer nach einem der vorhergehenden Ansprüche, **dadurch gekennzeichnet**, dass die Zugstufe des Dämpfers über ein Bedienelement (11) manuell einstellbar ist und dass die Druckstufe von der Viskosität des Dämpfungsmediums abhängig ist.

5. Stoßdämpfer nach einem der vorhergehenden Ansprüche, **dadurch gekennzeichnet**, dass das Bedienelement (11) der Zugstufe so angeordnet ist, dass es bei Montage des Dämpfers an einem Fahrrad während der Fahrt von dem Fahrer erreichbar ist.

6. Stoßdämpfer nach einem der vorhergehenden Ansprüche, **dadurch gekennzeichnet**, dass das Bedienelement (11) und ein Füllventil (10) koaxial zueinander an einer Stirnseite des Stoßdämpfers angeordnet sind, wobei vorzugsweise das Bedienelement (11) das Füllventil (10) ringförmig umgibt.

7. Stoßdämpfer nach einem der vorhergehenden Ansprüche, **dadurch gekennzeichnet**, dass eine Veränderung des von der Ruhelage aus möglichen Kompressionshubes mittels Buchsen (27) erfolgt, die auf die Druckstange (26) aufgesetzt werden.

8. Stoßdämpfer nach einem der vorhergehenden Ansprüche, **dadurch gekennzeichnet**, dass an den Enden des Dämpfungshubes aus einem Elastomer gefertigte Endanschläge angeordnet sind.

9. Stoßdämpfer nach einem der vorhergehenden Ansprüche, **dadurch gekennzeichnet**, dass der Kolben (21) mit der Druckstange (26) über ein flexibles Verbindungselement verbunden ist.

10. Stoßdämpfer nach einem der vorhergehenden Ansprüche, **dadurch gekennzeichnet**, dass in Betriebsstellung oberhalb des Kolbens (21) ein flüssiges Dämpfungsmedium eingefüllt ist, das bei maximal expandiertem Stoßdämpfer mindestens an das Dämpfungsventil (17) heranreicht.
